# EUROPEAN PATENT APPLICATION

(11) **EP 4 258 509 A1**
(43) Date of publication of application: **11.10.2023**
(21) Application number: 22166995.5
(22) Date of filing: 06.04.2022
(51) Int. Cl.: H02J 7/00, G05F 1/46

(54) **BATTERY CHARGING CIRCUITRY**

(71) Applicant: Koninklijke Philips N.V., 5656 AG Eindhoven (NL)
(72) Inventor: HEERINGA, Schelte, Eindhoven (NL)
(74) Representative: Philips Intellectual Property & Standards

(57) **Abstract**

According to an aspect, there is provided battery charging circuitry (300) for outputting a controllably variable charging current (I_{CHARGE}) for charging a battery (130), the battery charging circuitry (300) comprising: a control input node (310) for receiving a control signal (Sc); a level-shifting circuit (320) configured to receive the control signal (Sc) and output a control voltage (Vc) based on the control signal (Sc); a charging current output node (330) for outputting the charging current (I_{CHARGE}) to the battery (130); and a first voltage controlled current source (340) configured to receive the control voltage (Vc) and output the charging current (I_{CHARGE}) to the charging current output node (330) based on the control voltage (Vc), wherein the first voltage controlled current source (340) is configured such that the charging current (I_{CHARGE}) can be linearly varied over a defined operating range based on the control signal (Sc). According to another aspect there is provided a printed circuit board. According to another aspect there is provided a personal care device.

## Description

### FIELD OF THE INVENTION

The present disclosure relates to battery charging circuitry for outputting a controllably variable charging current for charging a battery. The present disclosure also relates to a printed circuit board (PCB) and a personal care device.

### BACKGROUND OF THE INVENTION

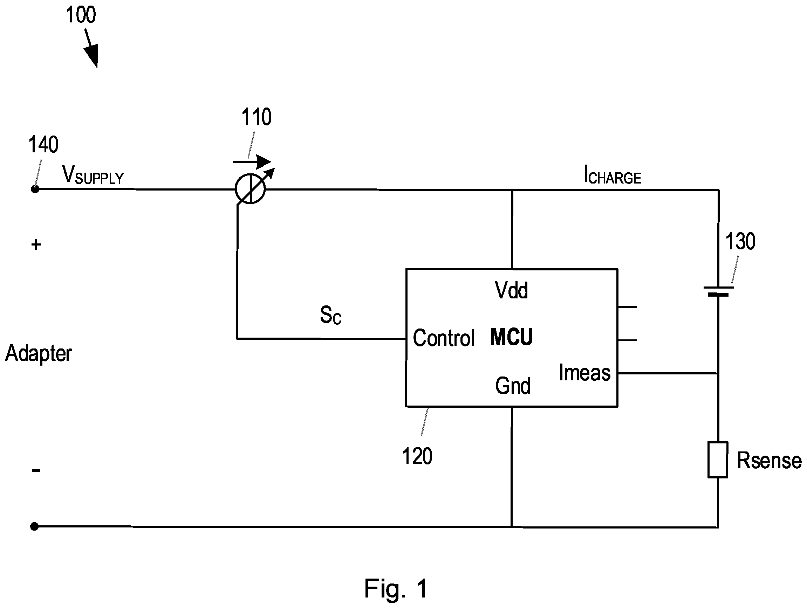

Many personal care devices such as grooming, beauty and oral healthcare devices include an on-board power source such as a battery. In such devices, all functions, including charging of a battery, are controlled by a microcontroller unit (MCU). Fig. 1 illustrates an example of circuitry 100 for charging a battery 130 in a personal care device. Circuitry 100 comprises charging circuitry 110 which is configured to receive a supply voltage V_{SUPPLY} from supply node 140 connected to an adapter and output a charging current I_{CHARGE} to the battery 130. The circuitry 100 further comprises MCU 120 which is configured to control the charging circuitry 110 and thus the charging current I_{CHARGE} using a feedback loop including sense resistor R_{SENSE}. MCU 120 is thus configured to measure the charging current I_{CHARGE} applied to the battery 130 across sense resistor R_{SENSE} and to control the charging circuitry 110 to vary the charging current I_{CHARGE} based on the measured charging current I_{CHARGE}. The MCU 120 is thus further configured to output a control signal Sc to the charging circuitry 110 to control the charging circuitry 110. A change to the control signal Sc may thus result in a change to the charging current I_{CHARGE}.

The voltage difference between the adapter connected to the supply node 140 and the battery 130 may be relatively large. Therefore, in order to provide protection for the battery 130, charging circuitry 110 is typically non-linear and scales the charging current I_{CHARGE} to an appropriate level so as not to damage the battery 130. Thus, a change to the control signal S_{C} would not typically result in a linear change to the charging current I_{CHARGE}.

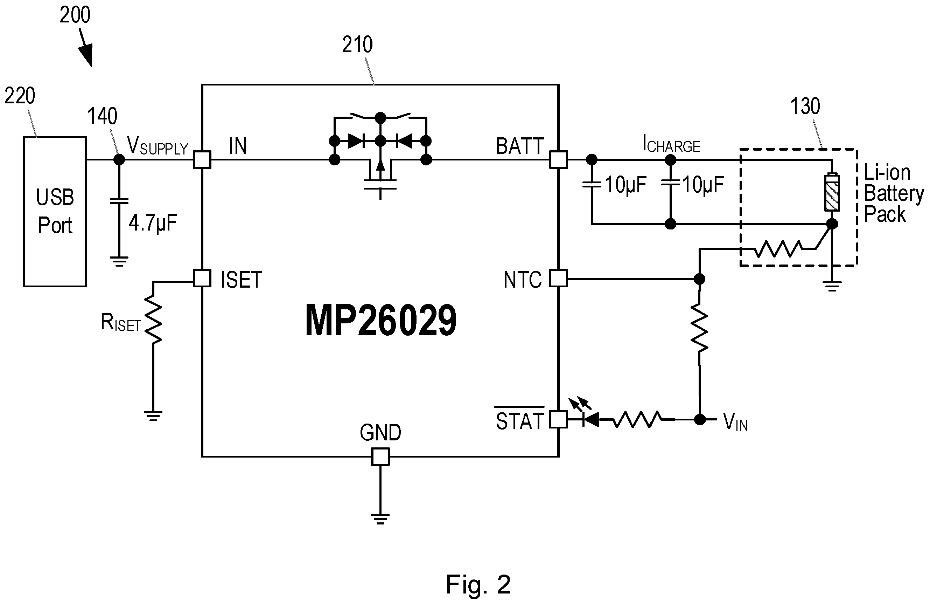

In other portable devices, where the difference between the supply voltage V_{SUPPLY} and the battery voltage is smaller, linear battery charging circuits are useable. Fig. 2 illustrates an example of circuitry 200 including a well-known linear battery charging integrated circuit (IC) 210, the MP26029 configured to charge a Li-Ion battery 130. The IC 210 is connected between supply node 140 and battery 130. Supply node 140 is configured to receive the supply voltage V_{SUPPLY} from a universal serial bus (USB) port 220. IC 210 is thus configured to receive the supply voltage V_{SUPPLY} and output a charging current I_{CHARGE} to the battery 130. As the difference between the supply voltage V_{SUPPLY} from the USB port 220 and the battery 130 may be relatively small, IC 210 may thus behave as a linear charging circuit. IC 210 may also include a number of integrated features for battery charging such as thermal regulation, pre-charge, high-accuracy constant-current charge (CC) up to 1A, high-accuracy constant-voltage (CV) regulation, charge termination and auto-recharge.

### SUMMARY OF THE INVENTION

Referring again the Fig. 1, charging circuitry 110 may enable charging of battery 130, however, charging circuitry 110 is typically non-linear. Linear charging circuitry is more desirable in many applications due to the low cost associated with such circuitry. However, in personal care devices, such circuitry is not generally useable, due to the large voltage difference that may be present between an adapter for supplying the supply voltage V_{SUPPLY} and the battery 130.

Referring again to Fig. 2, IC 210 may provide a linear battery charging circuit, which is widely available. However, a drawback with many linear battery charging ICs, such as IC 210 is that the IC typically includes a one-time-program (OTP) function to program parameters such as battery full voltage, termination current, input voltage limit, input overvoltage protection (OVP) threshold, thermal regulation threshold etc. These parameters are specific to a particular battery type or device type. As such, such ICs are specifically developed for a desired application where all functions are integrated into the IC. Due to the intended standalone operation, such ICs lack the functionality for interfacing with a microcontroller of a device. Furthermore, such ICs typically only comprise a disable function and an indication of 'charging complete' and there are no options for dynamic control of the charging current I_{CHARGE} output from the IC. The CC level and the CV level are fixed during operation and are not typically variable, as commonly, the external resistor R_{SET} connected to the ISET terminal of the IC 210 sets the charging current used in the CC charging. The absolute value of the current or voltage output from the IC for charging the battery is thus not variable. Therefore, the available linear battery charging ICs cannot be used in the battery charging circuitry of many personal care devices, such as the circuitry 100 illustrated in Fig. 1.

Therefore, there is a need for improved linear battery charging circuitry which can interface with a microcontroller for linearly varying a charging current for charging a battery.

According to a first specific aspect, there is provided battery charging circuitry for outputting a controllably variable charging current for charging a battery. The battery charging circuitry comprises:
a control input node for receiving a control signal; a level-shifting circuit configured to receive the control signal and output a control voltage based on the control signal; a charging current output node for outputting the charging current to the battery; and a first voltage controlled current source configured to receive the control voltage and output the charging current to the charging current output node based on the control voltage, wherein the first voltage controlled current source is configured such that the charging current can be linearly varied over a defined operating range based on the control signal.

In some examples, the first voltage-controlled current source may comprise a first transistor configured to receive the control voltage at a first transistor terminal and to output the charging current from a second transistor terminal to the charging current output node based on the control voltage.

In some examples, the first voltage-controlled current source may be coupled in a charging path between the battery and a USB connector.

In some examples, the level-shifting circuit may further comprise an output node connected to the first voltage controlled current source and a second transistor connected to the output node, wherein the second transistor may be configured to receive the control signal and output the control voltage to the output node.

In some examples, the battery charging circuitry may further comprise a supply node for supplying a supply voltage to the first voltage-controlled current source, wherein level-shifting circuit may further comprise a first resistive element connected in series between the supply node and the output node for generating the control voltage at the output node.

In some examples, the level-shifting circuit may further comprise a second resistive element connected in series between the second transistor and a reference node.

In some examples, the second resistive element may be connected in series between the reference node and the battery.

In some examples, a third resistive element may be connected in series between the supply node and the first voltage controlled current source.

In some examples, the battery charging circuitry may further comprise a low-pass filter configured to receive the control signal and output a filtered control signal, wherein the first voltage controlled current source may be configured to linearly vary the charging current over the defined operating range based on the filtered control signal.

In some examples, the battery charging circuitry may further comprise a gradient control circuit connected between the low-pass filter and an input of the level-shifting circuit for controlling a gradient of a linear relationship between the control signal and the charging current over the defined operating range.

In some examples, the first operating range may be between 0 A and 1 A.

In some examples, the battery charging circuitry may further comprise a general-purpose microcontroller configured to generate the control signal.

In some examples, the general-purpose microcontroller may be configured to measure the charging current across the second resistive element and to control a duty cycle of the control signal based on the charging current.

According to a second aspect there is provided a printed circuit board comprising the battery charging circuitry according to the first aspect.

According to a third aspect there is provided a personal care device comprising the battery charging circuitry according to the first aspect.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is an example of circuitry;
Fig. 2 is another example of battery charging circuitry;
Fig. 3 is an example of battery charging circuitry;
Fig. 4 is another example of battery charging circuitry;
Fig. 5 is a graph of the relationship between a charging current and a control signal;
Fig. 6 is another example of battery charging circuitry;
Fig. 7 is further example of battery charging circuitry;
Fig. 8 is another example of battery charging circuitry;
Fig. 9 is another example of battery charging circuitry;
Fig. 10 is an example of light emitting diode (LED) driving circuitry.

### DETAILED DESCRIPTION OF THE EMBODIMENTS

Examples according to the present disclosure provide battery charging circuitry which can linearly vary a charging current for charging a battery. The charging current may be linearly variable based on a control signal. The battery charging circuitry may interface with a general-purpose microcontroller such that the microcontroller may output the control signal to the battery charging circuitry to control the charging current. Battery charging circuitry according to examples of the present disclosure may thus present a linear battery charging circuit that can form part of a personal care device where the microcontroller controls all functions of the device. Furthermore, the facility to interface with the microcontroller enables the microcontroller to linearly vary the charging current based on measuring the charging current applied to the battery. The linear control of the charging current enables the microcontroller to set the charging current to substantially any value over the operating range of the components of the battery charging circuitry. As such, battery charging circuitry according to examples of the present disclosure may be used to charge many different battery types used in many different devices and is not restricted for charging only one battery type or specialised for only one device type.

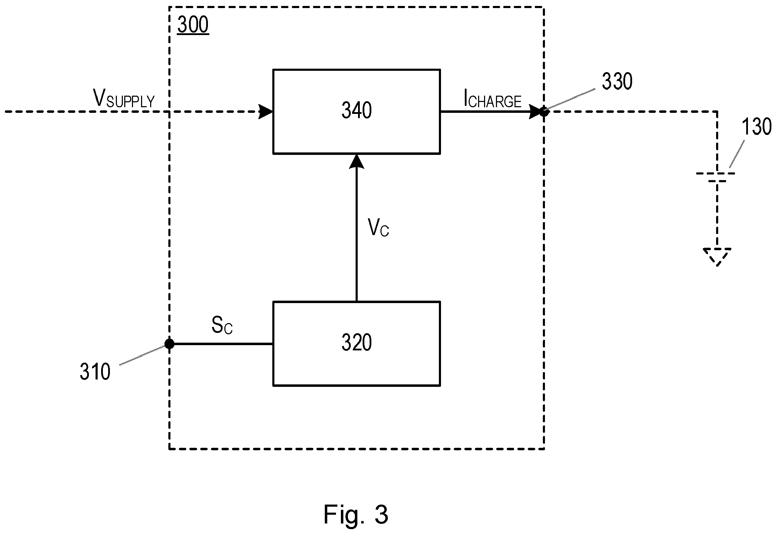

Fig. 3 illustrates an example of battery charging circuitry 300 for outputting a controllably variable charging current I_{CHARGE} for charging a battery 130. The battery charging circuitry 300 comprises a control input node 310 for receiving a control signal Sc. As will be described in more detail below, the battery charging circuitry 300 may further comprise a general-purpose microcontroller configured to generate the control signal Sc. The battery charging circuitry 300 further comprises a level-shifting circuit 320 configured to receive the control signal Sc and output a control voltage Vc based on the control signal S_{C}. As will be described in more detail below, the level-shifting circuit 320 may be configured to linearly vary the control voltage Vc based on the control signal Sc. The battery charging circuitry 300 further comprises a charging current output node 330 for outputting the charging current I_{CHARGE} to the battery 130. The battery charging circuitry 300 further comprises a first voltage controlled current source 340 configured to receive the control voltage Vc and output the charging current I_{CHARGE} to the charging current output node 330 based on the control voltage Vc. The first voltage controlled current source 340 is configured such that the charging current I_{CHARGE} can be linearly varied over a defined operating range based on the control signal Sc. In some examples, the first voltage controlled current source 340 may be configured to linearly vary the charging current over the defined operating range based on a change in the control signal Sc. For example, the control signal Sc may comprise a two-level signal where a change in the duty cycle of the control signal Sc results in a linear change in the charging current I_{CHARGE}.

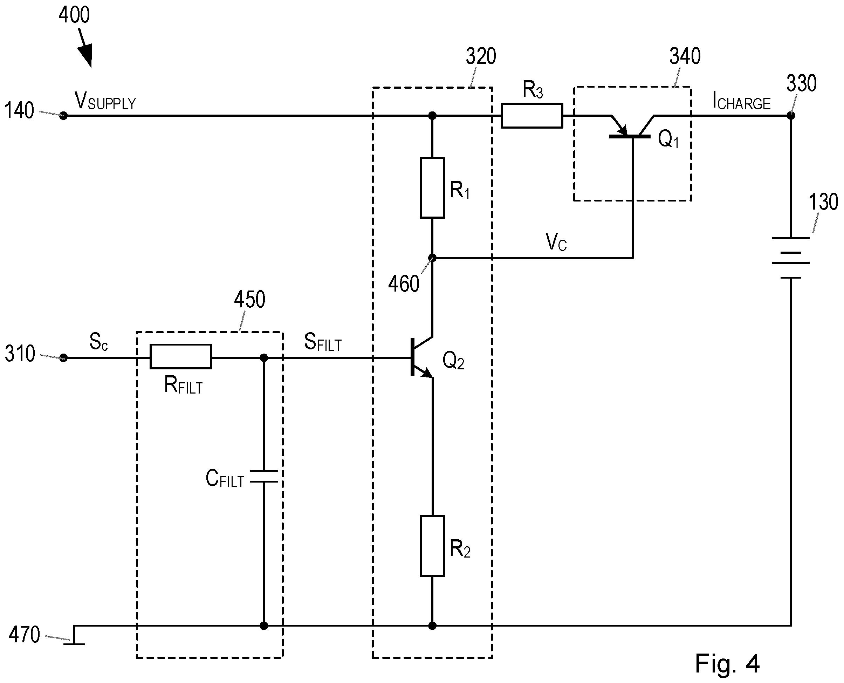

Fig. 4 illustrates an example of battery charging circuitry 400 according to examples of the present disclosure. Battery charging circuitry 400 comprises a number of elements in common with battery charging circuitry 300, which are labelled with corresponding reference numerals and may operate in substantially the same way as described above.

Battery charging circuitry 400 is configured to receive a supply voltage V_{SUPPLY} from a supply node 140 and output a charging current I_{CHARGE} to the battery 130 from charging current output node 330. Circuitry 400 further comprises a control input node 310 configured to receive the control signal Sc. In some examples, the control signal Sc may be received from a general-purpose microcontroller.

Battery charging circuitry 400 is thus configured to receive the control signal S_{C} at the control input node 310 and output the charging current I_{CHARGE} at the charging current output node 330. Battery charging circuitry thus comprises first voltage-controlled current source 340 coupled to the charging current output node 330 and configured to output the charging current I_{CHARGE} to the charging current output node 330. First voltage-controlled current source 340 comprises first transistor Q₁. First voltage-controlled current source 340 may be coupled in a charging path between the battery 130 and a USB connector. Thus, in some examples, the supply node 140 may be coupled to a USB connector and the supply voltage V_{SUPPLY} may be provided from the USB connector. First transistor Q₁ is configured to receive a control voltage Vc, from the level-shifting current circuit 320, at the base terminal of the first transistor Q₁, which in some examples may be referred to as a first transistor terminal. First transistor Q₁ is thus further configured to output the charging current I_{CHARGE} from the collector terminal of the first transistor Q₁, which in some examples may be referred to as a second transistor terminal, to the charging current output node 330 based on the control voltage Vc.

Battery charging circuitry 400 thus further comprises level-shifting current circuit 320 comprising second transistor Q₂, first resistor R₁, which in some examples may be referred to as a first resistive element and second resistor R₂ which in some examples may be referred to as a second resistive element. Level-shifting current circuit 320 is configured to output a control voltage Vc based on the control signal Sc. Level-shifting circuit 320 thus further comprises an output node 460 connected to the first voltage controlled current source 340. Second transistor Q₂ is connected to the output node 460 and is configured to receive the control signal Sc and output the control voltage Vc to the output node 460. First resistor R₁ is connected in series between supply node 140 and the output node 460 for generating the control voltage Vc at the output node 460. First resistor R₁ may thus convert a current, output from second transistor Q₂, into the control voltage Vc at the output node 460. Second resistor R₂ is connected in series between the second transistor Q₂ and reference node 470, which in the illustrated example of Fig. 4, comprises a ground node.

Battery charging circuitry 400 further comprises low-pass filter 450 comprising filter resistor R_{FILT} and filter capacitor C_{FILT}. Low-pass filter 450 may thus be configured to receive the control signal Sc and output a filtered control signal S_{FILT}. The filtered control signal S_{FILT} may thus be output to the level-shifting circuit 320, which is configured to generate the control voltage Vc to control the first current source 340. Thus, in some examples, the first voltage controlled current source 340 is configured to linearly vary the charging current I_{CHARGE} over a defined operating range based on the filtered control signal S_{FILT}. In some examples, the control signal S_{C} may comprise a two-level control signal and the filtered control signal S_{FILT} comprises an averaged control signal.

Battery charging circuitry 300 further comprises third resistor R₃, which in some examples may be referred to as a third resistive element. Third resistor R₃ is connected in series between the supply node 140 and the first voltage controlled current source 340.

In operation, control input node 310 may thus be configured to receive the control signal Sc. The low-pass filter 440 may thus receive the control signal Sc and output the filtered control signal S_{FILT} to the level-shifting circuit 320. However, in other examples, battery charging circuitry 440 may not comprise the low-pass filter 440 and the level-shifting circuit 320 may be configured to directly receive the control signal Sc. However, in examples where the control signal Sc comprises a two-level signal such as a PWM signal, level-shifting circuit 320 receiving the control signal Sc directly may introduce noise into the charging current I_{CHARGE}, as in such examples, a pulsating current may be drawn from the supply node 140. Thus, low-pass filter 450 may be configured to average a PWM control signal Sc to at least partly mitigate such noise resulting in a pulsating current. The time constant of low-pass filter 440 may thus be large enough to supress any ripple caused by a PWM control signal Sc.

Level-shifting circuit 320 may thus be configured to receive the control signal Sc, or a filtered version thereof and output a control voltage Vc to the first voltage-controlled current source 340. First voltage-controlled current source 340 is configured to output the charging current I_{CHARGE} based on the control voltage Vc.

Due to the coupling of the components in battery charging circuitry 400, over an operating range defined by the values of the components in battery charging circuitry 400, the charging current I_{CHARGE} is directly proportional to the control voltage Vc, which is in turn directly proportional to the control signal Sc, or an averaged value thereof. The charging current I_{CHARGE} is thus directly proportional to the control signal Sc. Therefore, a variation of the control signal Sc will result in a linear variation of the charging current I_{CHARGE} over the defined operating range.

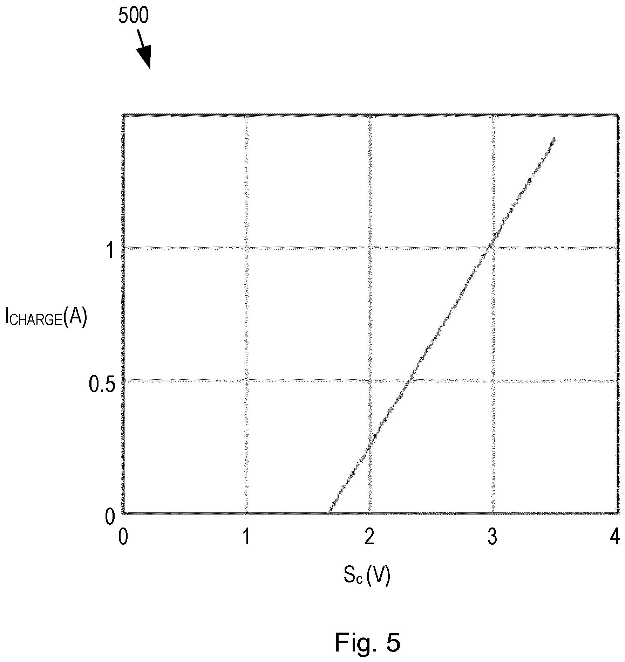

Fig. 5 illustrates a graph 500 of an example relationship between a control signal Sc and the charging current I_{CHARGE}. As illustrated, the relationship is substantially linear. Therefore, the charging current I_{CHARGE} may be controlled to be any value over a defined operating range by varying the control signal Sc in a proportional way. The first voltage controlled current source 340 may therefore be configured to output the charging current I_{CHARGE} at a plurality of values over the defined operating range, based on the control signal Sc, where the relationship between each of the values is linear.

As described above, the defined operating range is set by the rating values of the components of the battery charging circuitry 400. In some examples, the defined operating range may be from 0A to 1A. The graph 500 illustrates that the defined operating range may be from 0A to about 1.4A. The rating values of the components of the battery charging circuitry according to examples of the present disclosure, further defines the gradient of the relationship between the control signal Sc and the charging current I_{CHARGE} and the zero-crossing point. In particular, the resistor values of first R₁, and the second resistor R₂, the DC current gain of first transistor Q₁ and the base-emitter voltages of the first transistor Q₁ and the second transistor Q₂, determine the gradient of the relationship between the control signal Sc and the charging current I_{CHARGE} and the zero-crossing point, and thus the define the operating range. In the graph 500, the relationship between the control signal Sc and the charging current I_{CHARGE} is about 0.8 A/V and the zero crossing point is at about 1.7V. However, in other examples, the operating range may be from 0A to 0.1A. In such examples, the rating values of the components of the battery charging circuitry according to examples of the present disclosure may thus be set to obtain a gradient of the linear relationship between the control signal Sc and the charging current I_{CHARGE} from about 0.1-0.2 A/V. As described above, the control signal S_{C} may comprise a two-level signal and thus the values of the control signal Sc may refer to the average value of the control signal Sc.

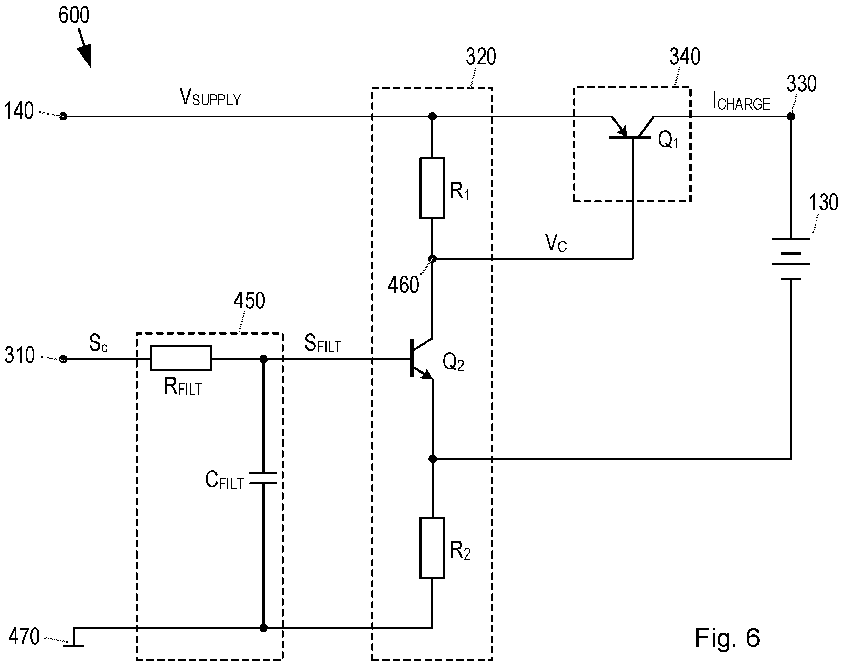

Fig. 6 illustrates another example of battery charging circuitry 600 according to examples of the present disclosure. Battery charging circuitry 600 comprises a number of elements in common with battery charging circuitry 300 and 400, which are labelled with corresponding reference numerals and may operate in substantially the same way as described above.

Battery charging circuitry 600 comprises second resistor R₂ connected in series between the reference node 470 and the battery 130. The charging current I_{CHARGE} may thus also be applied to the second resistor R₂. Therefore, in some examples, the charging current I_{CHARGE} may be measured across the second resistor R₂. For example, a general-purpose microcontroller may be configured to measure the charging current I_{CHARGE} across the second resistor R₂ and to control a duty cycle of the control signal S_{C} based on the charging current I_{CHARGE}. In such examples, an additional sense resistor may thus not be connected in series with the battery 130 and the charging current I_{CHARGE} may be measured across the second resistor R₂. Furthermore, battery charging circuitry 600 does not comprise third resistor R₃ connected in series between the supply node 140 and the first voltage controlled current source 340, which is present in battery charging circuitry 400. Thus, the charging path between the supply node 140 and the reference node 470 comprising the battery 130 may only comprise one resistive element, the second resistor R₂. In such examples, a higher voltage drop may be permitted across first transistor Q₁ of the first voltage-controlled current source 340. The larger voltage drop may therefore enable a wider range of transistor types to comprise the first transistor Q₁.

In battery charging circuitry 600, the coupling of the first resistor R₁ may mitigate leakage current from the first transistor Q₁. The coupling of the first resistor R₁ may further improve the linearity of the relationship between the control signal Sc and the charging current I_{CHARGE} over a wider operating range.

Referring again to Fig. 4, in some examples, the coupling of the third resistor R₃ between the supply node and the first voltage controlled current source 340 may thus be configured to set the linear relationship between the control signal Sc and the charging current I_{CHARGE} and help control the linear relationship between the control signal Sc and the charging current I_{CHARGE}.

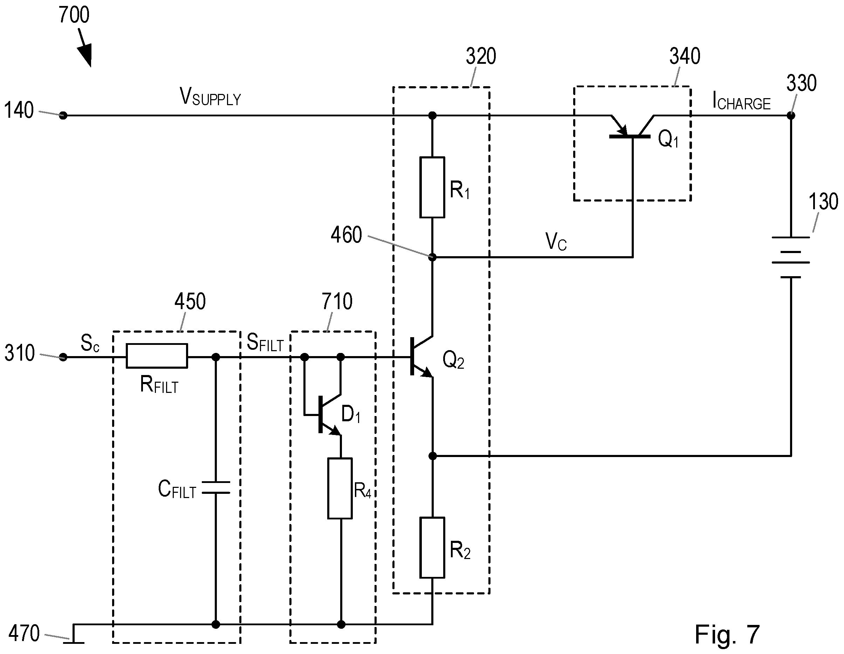

Fig. 7 illustrates another example of battery charging circuitry 700 according to the present disclosure. Battery charging circuitry 700 comprises a number of elements in common with battery charging circuitry 300, 400 and 600, which are labelled with corresponding reference numerals and may operate in substantially the same way as described above.

Battery charging circuitry 700 further comprises a gradient control circuit 710 connected between the low-pass filter 450 and an input of the level-shifting circuit 320 for controlling a gradient of a linear relationship between the control signal Sc and the charging current I_{CHARGE} over the defined operating range. The gradient control circuit 710 comprises a diode connected transistor D₁ and fourth resistor R₄ connected in series between the diode connected transistor D₁ and the reference node 470. In other examples, the diode connected transistor D₁ may be replaced with a diode, such as, a silicon diode, a schottky diode, a zener diode or another component with a suitable current and voltage characteristic.

The gradient control circuit 710 is configured to control the gradient and the zero crossing point of the linear relationship between the control signal Sc and the charging current I_{CHARGE}. For example, a range of the filtered control signal S_{FILT}, input to the level-shifting circuit 320, may be reduced by the gradient control circuit 710, such that, the gradient of the linear relationship between the control signal Sc and the charging current I_{CHARGE} is reduced. In some examples, the gradient control circuit 710 may thus scale down the filtered control signal S_{FILT} to reduce the gradient of the linear relationship between the control signal Sc and the charging current I_{CHARGE}. For example, the gradient control circuit 710 may effectively act to reduce the magnitude of the filtered control signal S_{FILT} input to the level-shifting circuit 320.

Gradient control circuit 710 therefore comprises fourth resistor R₄ which may be configured to reduce the gradient of the linear relationship between the control signal Sc and the charging current I_{CHARGE}. However, fourth resistor R₄ may also shift the zero crossing point of the relationship to a higher voltage. In some examples, the increase in the zero crossing point, due to the fourth resistor R₄, may be outside of the operating range of an MCU configured to generate the control signal Sc. Diode connected transistor D₁ may thus be configured to shift the zero crossing point to a lower voltage. In some examples, diode connected transistor D₁ may therefore counteract the increase in the zero-crossing point due to the fourth resistor R₄. Therefore, by appropriate configuration of the diode connected transistor D₁ and fourth resistor R₄, gradient control circuit 710 may be configured to reduce the gradient of the linear relationship between the control signal Sc and the charging current I_{CHARGE} whilst maintaining the zero-crossing point within the operating range of an MCU for generating the control signal Sc.

Referring again to Fig. 6, the gradient of the linear relationship between the control signal S_{C} and the charging current I_{CHARGE} for the battery charging circuitry 600 illustrated in Fig. 6 may be about 2 A/V. In such examples, a small change in the voltage of the control signal Sc may thus result in a relatively large change in the charging current I_{CHARGE} compared to the charging circuitry 400 illustrated in Fig. 4, where the gradient of the linear relationship between the control signal Sc and the charging current I_{CHARGE} is about 0.8 A/V. Reducing the gradient of the linear relationship between the control signal Sc and the charging current I_{CHARGE} may therefore result in a finer control of the charging current I_{CHARGE}. Therefore, the inclusion of the gradient control circuit 710 to reduce the gradient of the linear relationship between the control signal Sc and the charging current I_{CHARGE} in the battery charging circuitry 700 may result in a finer control of the charging current I_{CHARGE}. In one example, the inclusion of the gradient control circuit 710 in the battery charging circuitry 700 may result in a gradient of the linear relationship between the control signal Sc and the charging current I_{CHARGE} of 0.8 A/V, which is less than the battery charging circuitry 600 illustrated in Fig. 6 which does not comprise the gradient control circuit 710.

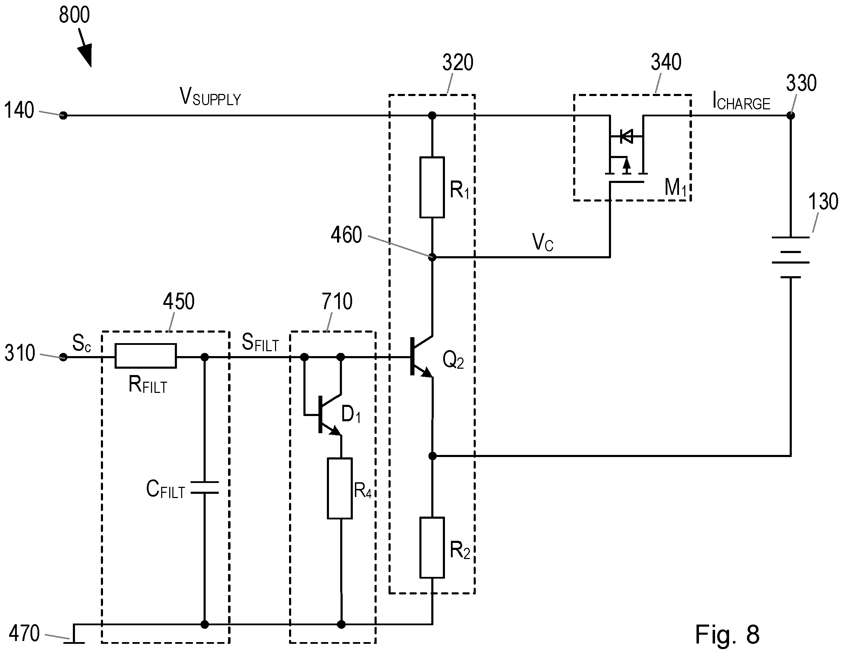

Fig. 8 illustrates another example of battery charging circuitry 800 according to the present disclosure. Battery charging circuitry 800 comprises a number of elements in common with battery charging circuitry 400, 600 and 700, which are labelled with corresponding reference numerals and may operate in substantially the same way as described above.

Battery charging circuitry 800 comprises first voltage controlled current source 340 comprising a first metal-oxide-semiconductor field-effect-transistor (MOSFET) M₁. First MOSFET M₁ may operate in substantially the same way as first transistor Q₁ described above. In such examples, first MOSFET M₁ may be configured to receive the control voltage Vc at the gate terminal and output the charging current I_{CHARGE} to the charging current output node 330 based on the control voltage Vc. In such examples, first voltage controlled current source 340 may thus again be configured to linearly vary the charging current I_{CHARGE} based on the control signal Sc. In some examples, second transistor Q₂ may also be replaced by a second MOSFET. In some examples, first transistor Q₁ and second transistor Q₂ may be replaced with any other suitable semiconductor device such that the battery charging circuitry may operate according to the examples of the present disclosure.

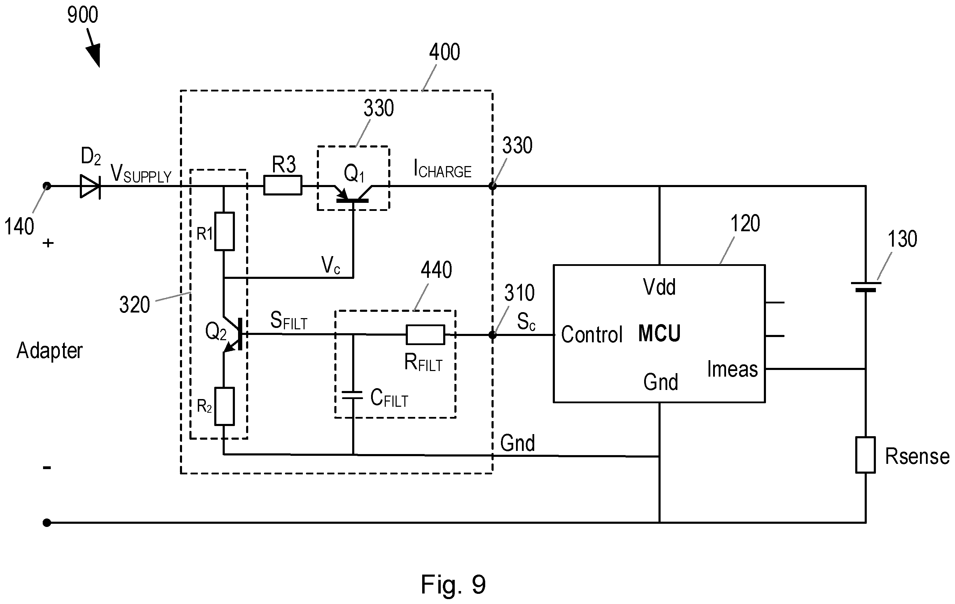

Fig. 9 illustrates circuitry 900 comprising the battery charging circuitry 400 described above with reference to Fig. 4. However, in other examples, circuitry 900 may comprise any battery charging circuitry according to the examples of the present disclosure, such as any one of battery charging circuitry 600, 700 or 800. In some examples, circuitry 900 may thus be referred to as battery charging circuitry 900.

Battery charging circuitry 900 thus further comprises general-purpose MCU 120 configured to output the control signal Sc to the control input node 310. Circuitry 900 further comprises a sense resistor R_{SENSE} connected in series with the battery 130. MCU 120 may thus be configured to measure the charging current I_{CHARGE} across the sense resistor R_{SENSE} and to control the duty cycle of the control signal Sc based on the charging current I_{CHARGE}. The sense resistor R_{SENSE} is thus connected between the current measuring terminal Iₘₑₐₛ and the ground terminal Gnd of the MCU 120 to measure the charging current I_{CHARGE} across the sense resistor R_{SENSE}. In other examples, the ground terminal Gnd of the MCU 120 may be connected to the negative terminal of the battery 130 and the current measuring terminal Iₘₑₐₛ may be connected downstream of the sense resistor R_{SENSE}, such that the sense resistor R_{SENSE} is again connected between the current measuring terminal Iₘₑₐₛ and the ground terminal Gnd of the MCU 120 to measure the charging current I_{CHARGE} across the sense resistor R_{SENSE}. In such examples, the MCU 120 may thus be configured to measure the negative voltage across the sense resistor R_{SENSE} to determine the charging current I_{CHARGE}. In other examples, as described above with reference to Fig. 6, circuitry 900 may not comprise sense resistor R_{SENSE} and the second resistor R₂ may be connected in series with the battery 130. In such examples, the MCU 120 may thus be configured to measure the current across the second resistor R₂.

MCU 120 may thus be configured to measure the charging current I_{CHARGE} across sense resistor R_{SENSE} and control the charging current I_{CHARGE} applied to the battery 130 by adjusting the control signal Sc. As the relationship between the charging current I_{CHARGE} and the control signal Sc over a defined operating range is linear, the MCU 120 may thus be configured to adjust the charging current I_{CHARGE} to any desired value over the operating range by proportionally adjusting the control signal Sc.

Battery charging circuitry 900 further comprises second diode D₂ connected between the supply node 140 and the battery 130. Second diode D₂ is configured to prevent discharge from the battery 130 in the event of the supply voltage V_{SUPPLY} falling below the voltage of the battery. In some examples, second diode D₂ may be replaced by a MOSFET.

Examples according to the present disclosure thus provide a linear battery charging circuit operable to linearly vary a charging current for charging a battery. The circuitry comprises a control input which can interface with a general-purpose microcontroller such that the microcontroller can adjust the charging current by varying a control signal output from the general-purpose microcontroller. As such, circuitry according to the present disclosure, provides a linear battery charging circuit which can be implemented in a personal care device where a microcontroller controls all functions of the device.

Examples according to the present disclosure further provide a linear battery charging circuit suitable for charging a variety of different battery types and useable in a variety of different devices. The linear battery charging circuitry is not restricted for use with only one type of battery or device, as the microcontroller can control the charging current through use of a feedback loop to measure the charging current.

Examples according to the present disclosure therefore present circuitry operable to linearly vary an output current, such as a charging current for charging a battery, based on a control signal. However, circuitry according to examples of the present disclosure may be adapted to output a current for other applications, for example, for driving a light-emitting diode (LED).

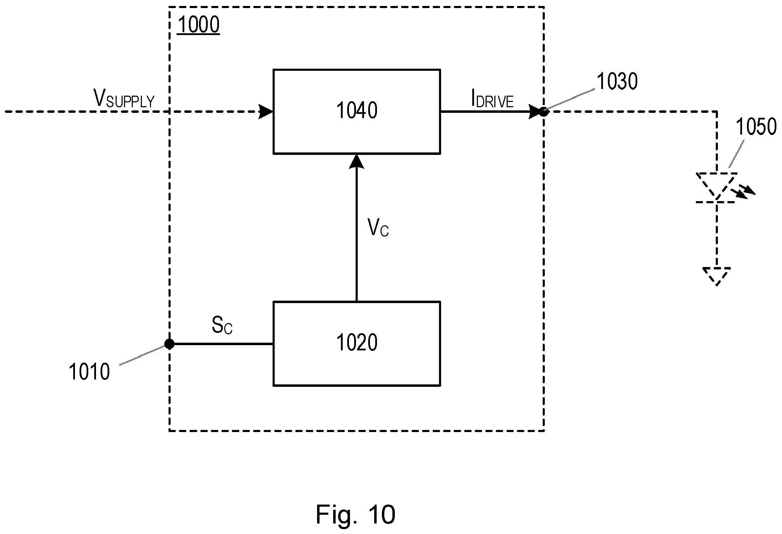

Fig. 10 illustrates an example of LED driving circuitry 1000 for outputting a controllably variable driving current I_{DRIVE} for driving an LED 1050. The LED driving circuitry 1000 comprises a control input node 1010 for receiving a control signal Sc. In some examples, the control signal Sc may be received from a general-purpose microcontroller. LED driving circuitry 1000 further comprises a level-shifting circuit 1020 configured to receive the control signal Sc and output a control voltage Vc based on the control signal S_{C}. The LED driving circuitry 1000 further comprises a driving current output node 1030 for outputting the driving current I_{DRIVE} to the LED 1050. The LED driving circuitry 1000 further comprises a first voltage controlled current source 1040 configured to receive the control voltage Vc and output the driving current I_{DRIVE} to the driving current output node 1030 based on the control voltage Vc. The first voltage controlled current source 1040 is configured such that the driving current I_{DRIVE} can be linearly varied over a defined operating range based on the control signal Sc.

In a similar manner to the battery charging circuitry described above in accordance with examples of the present disclosure, LED driving circuitry 1000 may be operable to linearly vary a driving current I_{DRIVE} based on a variation in the control signal S_{C}. Said LED driving circuitry 1000 may further receive the control signal Sc from a general-purpose microcontroller. LED driving circuitry 1000 may therefore also be implemented in a personal care device where a microcontroller controls all functions of the device. LED driving circuitry 1000 may comprise any of the components and functionality described above with respect to the battery charging circuitry according to the examples of the present disclosure. Circuitry according to the examples of the present disclosure may therefore be adapted for driving an LED.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Battery charging circuitry (300) for outputting a controllably variable charging current (I_{CHARGE}) for charging a battery (130), the battery charging circuitry (300) comprising:
a control input node (310) for receiving a control signal (Sc);
a level-shifting circuit (320) configured to receive the control signal (Sc) and output a control voltage (Vc) based on the control signal (Sc);
a charging current output node (330) for outputting the charging current (I_{CHARGE}) to the battery (130); and
a first voltage controlled current source (340) configured to receive the control voltage (Vc) and output the charging current (I_{CHARGE}) to the charging current output node (330) based on the control voltage (Vc), wherein the first voltage controlled current source (340) is configured such that the charging current (I_{CHARGE}) can be linearly varied over a defined operating range based on the control signal (Sc).

2. Battery charging circuitry according to claim 1 wherein the first voltage-controlled current source (340) comprises a first transistor (Q₁) configured to receive the control voltage (Vc) at a first transistor terminal and to output the charging current (I_{CHARGE}) from a second transistor terminal to the charging current output node (330) based on the control voltage (Vc).

3. Battery charging circuitry according to claim 1 or 2 wherein the first voltage-controlled current source (340) is coupled in a charging path between the battery (130) and a universal serial bus, USB, connector.

4. Battery charging circuitry according to any preceding claim, wherein the level-shifting circuit (320) further comprises an output node (460) connected to the first voltage controlled current source (340) and a second transistor (Q₂) connected to the output node (460), wherein the second transistor (Q₂) is configured to receive the control signal (Sc) and output the control voltage (Vc) to the output node (460).

5. Battery charging circuitry according to claim 4 further comprising a supply node (140) for supplying a supply voltage (V_{SUPPLY}) to the first voltage-controlled current source (340), wherein level-shifting circuit (320) further comprises a first resistive element (R₁) connected in series between the supply node (240) and the output node (460) for generating the control voltage (Vc) at the output node (460).

6. Battery charging circuitry according to claim 5 wherein level-shifting circuit (320) further comprises a second resistive element (R₂) connected in series between the second transistor (Q₂) and a reference node (470).

7. Battery charging circuitry according to claim 6 wherein the second resistive element (R₂ is connected in series between the reference node (470) and the battery (130).

8. Battery charging circuitry according to any of claims 4 to 7 further comprising a third resistive element (R₃) connected in series between the supply node (140) and the first voltage controlled current source (340).

9. Battery charging circuitry according to any preceding claim further comprising a low-pass filter (450) configured to receive the control signal (Sc) and output a filtered control signal (S_{FILT}), wherein the first voltage controlled current source (340) is configured to linearly vary the charging current (I_{CHARGE}) over the defined operating range based on the filtered control signal (S_{FILT}).

10. Battery charging circuitry according to claim 9, further comprising a gradient control circuit (710) connected between the low-pass filter (450) and an input of the level-shifting circuit (320) for controlling a gradient of a linear relationship between the control signal (Sc) and the charging current (I_{CHARGE}) over the defined operating range.

11. Battery charging circuitry according to any preceding claim wherein the first operating range is between 0 A and 1 A.

12. Battery charging circuitry according to any preceding claim further comprising a general-purpose microcontroller (120) configured to generate the control signal (Sc).

13. Battery charging circuitry according to claim 12, when dependent on claim 7, wherein the general-purpose microcontroller (120) is configured to measure the charging current (I_{CHARGE}) across the second resistive element (R₂) and to control a duty cycle of the control signal (S_{C}) based on the charging current (I_{CHARGE}).

14. A printed circuit board comprising the battery charging circuitry according to any preceding claim.

15. A personal care device comprising the battery charging circuitry according to any of claims 1 to 13.
